# EUROPÄISCHE PATENTSCHRIFT

(11) **EP 1 597 107 B1**
(45) Veröffentlichungstag und Bekanntmachung des Hinweises auf die Patenterteilung: **14.07.2010**
(21) Anmeldenummer: 04711344.4
(22) Anmeldetag: 16.02.2004
(51) Int. Cl.: B60N 2/02

(54) **VERFAHREN ZUR STEUERUNG EINER SITZEINSTELLUNG**
METHOD FOR CONTROLLING A SEAT ADJUSTMENT
PROCEDE DE COMMANDE DU REGLAGE D'UN SIEGE

(30) Priorität: 27.02.2003 DE 10308415
(43) Veröffentlichungstag der Anmeldung: 23.11.2005
(73) Patentinhaber: Bayerische Motoren Werke Aktiengesellschaft, 80809 München (DE)
(72) Erfinder: AUGST, Alexander, 80937 München (DE); DURACH, Stephan, 81667 München (DE); BORKE, Danny, 85408 Gammelsdorf (DE)
(86) Internationale Anmeldenummer: PCT/EP2004/001448
(87) Internationale Veröffentlichungsnummer: WO 2004/076227

(56) Entgegenhaltungen:
- WO-A-02/08022
- DE-A- 10 246 318
- US-A- 4 797 824
- US-B1- 6 614 344

## Beschreibung

Die Erfindung bezieht sich auf ein Verfahren zur Steuerung einer Sitzeinstellung.

Es ist bekannt, dass in Kraftfahrzeugen die Sitzeinstellung mit Elektromotoren vorgenommen werden kann. Die Ansteuerung der Elektromotore erfolgt über ein Bedienelement, bspw. einen Hebel oder einen Schalter, mit dem eine Person gewünschte Sitzverstellungen vornehmen kann.

Aus der WO 02/08022 A2 ist eine gattungsbildende Vorrichtung bekannt, bei der mit einem Kamerasystem eine Person auf einem Fahrzeugsitz identifiziert werden kann und anhand bereits gespeicherter Sitzpositionsdaten die Sitzeinstellung entsprechend der identifizierten Person automatisch vorgenommen wird.

Die erst nach dem Anmeldetag veröffentlichte DE 102 46 318 beschreibt eine Vorrichtung und ein Verfahren ebenfalls zur automatischen Sitzeinstellung. Mit Hilfe eines Kamerasystems wird die auf dem Fahrzeugsitz sitzende Person nicht nur identifiziert, sondern die gesamte Sitzposition erfasst. Diese aktuelle Sitzposition wird mit der dazugehörigen gespeicherten Sitzposition der identifizierten Person verglichen und abhängig davon die Sitzeinstellung vorgenommen.

Aus den bekannten Verfahren und Vorrichtungen kann keine intuitive Sitzeinstellung vorgenommen werden.

Aufgabe der Erfindung ist, die bereits bekannten Verfahren zur Steuerung einer Sitzeinstellung zu verbessern.

Diese Aufgabe wird erfindungsgemäß durch ein Verfahren gemäß Patentanspruch 1 gelöst. Vorteilhafte Weiterbildungen sind die Gegenstände der abhängigen Patentansprüche.

Es handelt sich um ein Verfahren zur Steuerung einer Sitzeinstellung mittels eines Innenraum-Kamerasystems, mit dem Bilder zumindest eines Teils einer auf einem Fahrzeugsitz sitzenden Person erfasst werden und mittels einer Steuereinheit, durch die aus einer Folge von Bildern zumindest eine Bewegungsart der auf dem Fahrzeugsitz sitzenden Person erkannt wird und die erkannte Bewegungsart mit bereits in der Steuereinheit abgespeicherten Bewegungsarten verglichen wird und bei Erkennung einer abgespeicherten Bewegungsart eine dieser Bewegungsart zugeordnete Sitzeinstellung vorgenommen wird.

Mit dem erfindungsgemäßen Verfahren soll eine Bewegung des Insassen einer Verstellung des Sitzes zugeordnet werden. Wir ein Bewegungsmuster bzw. eine Bewegungsart erkannt, wird eine bestimmte Sitzeinstellung vorgenommen. Dies kann entweder eine komplette Verstellung des Sitzes sein (d. h. der gesamte Sitz passt sich bspw. der Bewegung des Insassen an) oder es werden nur einzelne Sitzparameter verstellt.

Besonders vorteilhaft ist dieses Verfahren, wenn der auf dem Fahrzeugsitz sitzenden Person eine intuitive Sitzeinstellung ermöglicht wird. Die Sitzeinstellung folgt der Bewegungsart der Person. Eine intuitive Bewegung ist bspw. mit dem Kopf möglich. Die Erfassung der Kopfposition und Kopfbewegungen der Insassen durch ein Innenraum-Kamerasystem ist im Gegensatz zu der Erkennung der Handgestik relativ einfach realisierbar.. Wünscht die Person bspw. eine Erhöhung der Sitzfläche, um eine bessere Sicht zu haben, kann sie bspw. den Körper bzw. Kopf nach oben bewegen. Das Kamerasystem erfasst die Bewegung und die Steuereinheit erkennt die entsprechende Bewegungsart. Ist eine derartige Bewegungsart in der Steuereinheit abgespeichert wird eine zugeordnete Sitzeinstellung, in diesem Fall bspw. eine Erhöhung der Sitzfläche, vorgenommen.

Die neue gesetzliche Regelung bezüglich Airbagsystemen in den USA (FMVSS208 von NHTSA) schafft die Notwendigkeit eines Innenraum-Sensierungssystems zur Bestimmung der Sitzbelegung und der Kopfposition des Beifahrers. Für mehrere Automobile aus der Premium-Klasse ist zu diesem Zweck ein Innenraumkamerasystem, meist ein 3D-Kamerasystem vorgesehen. Es ist von Vorteil, dieses bereits vorhandene Kamerasystem auch für die Steuerung einer Sitzeinstellung zu verwenden. Dadurch fallen für den Kraftfahrzeug-Hersteller keine zusätzlichen Kosten für das Kamerasystem an.

Für die erfindungsgemäße Sitzeinstellung muss zumindest der (Körper-) Teil einer auf einem Fahrzeugsitz sitzenden Person erfasst werden, von dem die intuitive Bewegung für die Sitzeinstellung vorgenommen wird. Besonders vorteilhaft erscheint die Auswertung der Kopfposition und Kopfbewegungen.

Die Steuereinheit kann aus Kosten- und/oder Platzgründen im bereits vorhandenen Steuergerät für die Sitzeinstellung integriert sein. Es ist aber auch möglich, die Steuereinheit mit Hilfe einer Datenübertragungseinheit mit der Sitzeinstellung zu verbinden. In diesem Fall werden lediglich die Daten für die Verstellung eines oder mehrerer Sitzparameter und/oder der Aufruf einer vorgespeicherten Sitzeinstellung übertragen.

Die erfindungsgemäße Steuerung wird entweder willkürlich oder automatisch ein bzw. ausgeschaltet.

Vorteilhafterweise wird die erfindungsgemäße Steuerung der Sitzeinstellung mittels eines Bedienelements und/oder abhängig von Betriebsparametern des Fahrzeuges aktiviert. Dadurch wird verhindert, dass eine ungewollte Sitzeinstellung bzw. Sitzverstellung vorgenommen wird. Bspw. wird ein Bedienelement betätigt um die Steuerung zu aktivieren. Es besteht auch die Möglichkeit, die Steuerung per Spracheingabe, z. B. mittels eines Schlüsselworts, mittels Gestik oder einer anderen Mensch-Maschine-Interaktions-Funktion zu aktivieren. Alternativ dazu kann die erfindungsgemäße Steuerung automatisch abhängig von bestimmten Betriebsparametern des Fahrzeuges (z. B. bei Motorstart oder bei einer geringen Geschwindigkeit) aktiviert werden.

Ist die erfindungsgemäße Steuerung der Sitzeinstellung aktiv, ist sie vorteilhafterweise für eine vorgegebene Zeit aktiv. Alternativ wird die Steuerung der Sitzeinstellung mittels eines Bedienelements deaktiviert. Die Deaktivierung kann per Tastendruck, Spracheingabe, Gestik oder einer anderen Mensch-Maschine-Interaktions-Funktion erfolgen.

Vorteilhafterweise wird nach Beendigung der Sitzeinstellung die aktuelle Sitzposition der auf dem Fahrzeugsitz sitzenden Person zugeordnet und in der Steuereinheit abgespeichert. Sobald die Steuerung der Sitzeinstellung deaktiviert ist, wird die Sitzeinstellung gespeichert. Wird das Fahrzeug von mehreren Personen genutzt, muss eine eindeutige Zuordnung mittels Identifizierung der Person (wie z. B. aus der WO 02/08022 A2 bekannt) oder zumindest eine Unterscheidung der Personen innerhalb der Benutzergruppen stattfinden. Die Unterscheidung der Personen aus einer begrenzten Gruppe bekannter, im System gespeicherter Personen, erfordert deutlich kleinere Rechenressourcen, als bekannte Personenerkennungsverfahren. Erkennt das System bspw. zu einem späteren Zeitpunkt eine bestimmte Person wieder, kann automatisch die zuletzt von dieser Person gespeichert Sitzeinstellung erfolgen. Dadurch wird die Sitzeinstellung benutzerfreundlicher und komfortabler.

## Patentansprüche

1. Verfahren zur Steuerung einer Sitzeinstellung mittels eines Innenraum-Kamerasystems, mit dem Bilder zumindest eines Teils einer auf einem Fahrzeugsitz sitzenden Person erfasst werden und einer Steuereinheit, **dadurch gekennzeichet, dass** mittels der Stenereinheit aus einer Folge von Bildern zumindest eine Bewegungsart der auf dem Fahrzeugsitz sitzenden Person erkannt wird und die erkannte Bewegungsart mit bereits in der Steuereinheit abgespeicherten Bewegungsarten verglichen wird und bei Erkennung einer abgespeicherten Bewegungsart eine dieser Bewegungsart zugeordnete Sitzeinstellung vorgenommen wird.

2. Verfahren nach Patentanspruch 1, **dadurch gekennzeichnet dass** die Steuerung der Sitzeinstellung mittels eines Bedienelements und/oder abhängig von Betriebsparametern des Fahrzeuges aktiviert wird.

3. Verfahren nach Patentanspruch 1 oder 2, **dadurch gekennzeichnet, dass** die Steuerung der Sitzeinstellung für eine vorgegebene Zeit aktiviert ist.

4. Verfahren nach Patentanspruch 1 oder 2, **dadurch gekennzeichnet, dass** die Steuerung der Sitzeinstellung mittels eines Bedienelements und/oder abhängig von Betriebsparametern des Fahrzeuges deaktiviert wird.

5. Verfahren nach einem der Patentansprüche 1 bis 4, **dadurch gekennzeichnet, dass** nach Beendigung der Sitzeinstellung die aktuelle Sitzposition der auf dem Fahrzeugsitz sitzenden Person zugeordnet und in der Steuereinheit abgespeichert wird.

## Claims

1. A method for controlling a seat adjustment by means of an interior camera system, with which images of at least a part of a person sitting on a vehicle seat are recorded, and a control unit, **characterised in that**, using the control unit, at least one type of movement of the person sitting on the vehicle seat is recognised from a series of images and the recognised type of movement is compared with types of movement already stored in the control unit and, on recognition of a stored type of movement, a seat adjustment associated with this type of movement is carried out.

2. A method according to claim 1, **characterised in that** the control of the seat adjustment is activated by means of an operating element and/or as a function of operating parameters of the vehicle.

3. A method according to claim 1 or 2, **characterised in that** the control of the seat adjustment is activated for a predetermined time.

4. A method according to claim 1 or 2, **characterised in that** the control of the seat adjustment is deactivated by means of an operating element and/or as a function of operating parameters of the vehicle.

5. A method according to any one of claims 1 to 4, **characterised in that** after the seat adjustment has ended, the current sitting position is associated with the person sitting on the vehicle seat and stored in the control unit.

## Revendications

1. Procédé de commande de réglage d'un siège à l'aide d'un système de caméra d'habitacle par lequel on saisit l'image d'au moins une partie d'une personne assise sur un siège du véhicule et une unité de commande,
**caractérisé en ce qu'**
à l'aide de l'unité de commande, à partir d'une suite d'images on reconnaît au moins un mode de mouvement de la personne assise sur le siège du véhicule et
on compare le mode de mouvement reconnu à des modes de mouvements enregistrés en mémoire dans l'unité de commande et
lorsqu'on reconnaît un mode de mouvement mémorisé, on effectue un réglage de siège associé à ce mode de mouvement.

2. Procédé de commande d'un réglage d'un siège selon la revendication 1,
**caractérisé en ce que**
l'on active la commande du réglage de siège à l'aide d'un élément de manoeuvre et/ou selon des paramètres de fonctionnement du véhicule.

3. Procédé de commande d'un réglage d'un siège selon la revendication 1 ou 2,
**caractérisé en ce que**
l'on active la commande du réglage de siège pour une durée prédéfinie.

4. Procédé de commande d'un réglage d'un siège selon la revendication 1 ou 2,
**caractérisé en ce que**
l'on neutralise la commande du réglage du siège à l'aide d'un élément de manoeuvre et/ou selon les paramètres de fonctionnement du véhicule.

5. Procédé de commande d'un réglage d'un siège selon la revendication 1 à 4,
**caractérisé en ce qu'**
après avoir déterminé le réglage du siège on associe la position actuelle du siège à la personne assise sur le siège du véhicule et on l'enregistre dans l'unité de commande.
